# EUROPEAN PATENT SPECIFICATION

(11) **EP 4 213 148 B1**
(45) Date of publication and mention of the grant of the patent: **03.06.2026**
(21) Application number: 23152193.1
(22) Date of filing: 18.01.2023
(51) Int. Cl.: G11B 3/31, G11B 3/10

(54) **PICK-UP ARM FOR RECORD PLAYER**
AUFNAHMEARM FÜR PLATTENSPIELER
BRAS DE LECTURE POUR TOURNE DISQUE

(30) Priority: 18.01.2022 DK PA202270021
(43) Date of publication of application: 19.07.2023
(73) Proprietor: Nordic Hi-Fi A/S, 9610 Nørager (DK)
(72) Inventor: Gjedbo Kragelund, Michael, 7500 Holstebro (DK)
(74) Representative: Patrade A/S

(56) References cited:
- JP-A- S51 117 003
- JP-U- S5 686 607
- ORTOFON A/S: "TA-110 & TA-210 Tonearms", 31 March 2016 (2016-03-31), Internet, pages 1 - 2, XP093048822, Retrieved from the Internet <URL:https://web.archive.org/web/20160317010954if_/http://www.ortofon.com/media/15063/ta-110_ta-210-productsheet.pdf> [retrieved on 20230523]
- ORTOFON A/S: "TA-210 12" tonearm", 28 December 2015 (2015-12-28), Internet, pages 1 - 13, XP093048851, Retrieved from the Internet <URL:https://web.archive.org/web/20151228052723/http://www.ortofon.com:80/ta-210-p-432-n-3448> [retrieved on 20230523]

## Description

### Field of the Invention

The present invention relates to a modified pick-up arm typically used in record players.

### Background of the Invention

In a vinyl record, tone grooves are cut/formed. The bottom or sidewalls of the grooves are provided with undulations creating the sound picked up by the pickup device and transferred to an appropriate amplifier and therefrom to some kind of sound reproduction unit - typically a loudspeaker.

Typically, the pick-up arm including the pick-up are well balanced such that minimal pressure is exerted by the pick-up in the groove, and at the same time enough downward pressure to maintain the pick-up in the groove. For these reasons pick-up arms are normally very light constructions.

Due to the nature of the very small undulations creating slight vibrations, provided in the grooves and the overall pick-up construction, these types of constructions are very fragile physically, i.e. the pick-up arms are made from very thin material thicknesses from often lightweight materials. At the same time the minute vibrations created by the action of the pick-up's travel in the groove is transmitted to the pick-up arm. This in turn creates vibrations and resonance. Furthermore, also influences from the ambient environment (for example loudspeakers) affect the resonance.

In order to address this problem FR2425119 proposes a tone arm construction where the tone arm is a flat non-tubular construction, directly fixed to its articulation point (opposite the end with the pick-up).

Another proposed solution to minimizing resonant acoustic vibrations and counter resonance frequencies in the tone arm, affecting the reproducing of the sound is suggested in US 4,147,364. Here the tone arm is assembled from a plurality of circular pipe-sections, which are assembled at tangent points on their periphery. The aim of this construction is to minimize or altogether avoid propagation of longitudinal wave vibrations in the tone arm, as such vibrations have a negative effect on the pick-up and thereby the reproduction of the sound.

In the prior art the company Ortofon A/S has introduced two tone arms identified as TA-110 and TA-210. In order to provide damping for unwanted resonances and vibrations, slits are provided in the tone arm construction. The slits are filled with a proprietary rubber compounds in order to provide the desired damping properties.

In JPS5686607U is disclosed a tone arm manufacturing process where a tube is worked to provide a flat end suitable to mount a pick-up to. A window is provided into the tube part.

In JPS51117003A is disclosed a mounting construction for a tone arm, which allows the pick-up to be longitudinally displaced relative to the mounting. It is thereby possible for the pick-up to retain a constant tangentially angle with respect to the spiral groove in a recording medium such as for example a vinyl record. By maintaining a constant angle between the pick-up needle and the groove tracking errors are eliminated as well as distortion of the signal. The translation of the tone arm is achieved by a combination of a slit in a section of the tone arm arranged inside the mounting as such, where a guide pin is arranged in the slit. A further roller and track guides the movement of the tonearm.

A further problem is the lateral forces impacting the pick-up. As the pick-up is displaced in the horizontal direction relative to the pick-up arms' pivot point, the pick-up and particularly the pick-up arm will be exposed to torsion (twisting). As the structure of the pick-up is relatively stiff, the pick-up arm construction and the pick-up arm's fastening to the pivot mechanism will create resonance influencing the sound reproduction.

Also, as the pick-up arm pivots around an axis off-set from the record, the angle of the pick-up arm (and thereby the pickup) will change as the pick-up follows the groove towards the centre of the record.

None of the prior art documents addresses in a simple and reliable manner the issue of dampening resonance-related issues in a tubular tone arm occurring due to torsion.

### Object of the Invention

It is an object of the present invention to provide a pick-up arm which removes the influence of the resonance on the sound reproduction, in particular torsional arm resonance.

### Description of the Invention

The present invention consequently provides a pick-up arm for record players suitable to play recording discs, where said pick-up arm adjacent one end is mounted to a mounting allowing the pick-up arm to pivot about an axis orthogonal to the plane of the recording discs, and where a pickup is mounted in the opposite end of the pick-up arm, characterized in that the pick-up arm is a monolithic hollow tube-structure, wherein one or more apertures is/are provided in the pick-up arm, said aperture(s) penetrating through said pick-up arm such that by providing apertures in the pick-up arm any resonance phenomenon is substantially reduced thereby greatly improving the sound quality.

Tests with various pick-up arms have surprisingly indicated that by providing apertures in the pick-up arm the resonance phenomenon may be substantially reduced thereby greatly improving the sound quality. The apertures will of course reduce the moment of resistance of the pick-up arm and as such provide a more flexible pick-up arm. In general, the arm will retain its stiffness, but will be "softer" with respect to twisting/torsion. From the outset a monolithic tubular tonearm may be a simple mechanical construction which inherently provides stable and strong mechanical characteristics, such as stiffness, torsional strength and lightness.

This flexibility appears to address the problem with the creation of resonance in prior art pick-up arms.

In a further advantageous embodiment of the invention the aperture is arranged parallel to the direction of the axis around which the pick-up arm pivots.

Typically, the pick-up arm will pivot around a vertical access where the turntable on which the recording discs are placed is also rotating around a vertical access. Consequently, the aperture in this embodiment will also have an orientation typically in a vertical direction.

In a further advantageous embodiment of the invention the aperture is arranged perpendicular to the direction of the axis around which the pick-up arm pivots.

This direction is orthogonal/perpendicular to the direction of the aperture in the previous embodiment. However, for both embodiments it is clear that the apertures are arranged in the pick-up arm in such a manner that they will weaken the moment of resistance of the cross-section of the pick-up arm and in this manner minimize the resonance generated by the pick-up arm. The stiffness of the arm is retained, but the resistance against torsion is lessened.

In general, the pick-up, when it is inserted into a groove provided in a recording disc will be urged downwards by a balancing weight of the pick-up arm such that only minimum pressure is provided on the pick-up. However, sufficient pressure on the pick-up must be provided such that the pick-up stays reliably in the groove as the record is turning, whereby the pick-up travels through the groove.

Inside the groove are provided small notches, indentations or bumps which will affect the pick-up which in turn will translate the physical impact from the notches, bumps and indentations in the groove to sound which may be transmitted to a loudspeaker through an amplifier. During this process where the pick-up is influenced by notches, bumps and indentations provided inside the grooves the pick-up arm will also be affected by this "rattling" of the pick-up which is created in order to reproduce the sound of the recording.

The apertures will dampen the influence of this rattling such that resonance is avoided.

In a still further advantageous embodiment of the invention the aperture is in the shape of a slit, where said slit's longitudinal extend is arranged in parallel to the longitudinal extend of the pick-up arm.

In a still further advantageous embodiment of the invention the width of the slit orthogonal to the longitudinal extend of the pick-up arm is between 0.1mm to 4 mm, more preferred between 0.5 mm and 2 mm.

These types of slits having these dimensions it is clear that they do not substantially affect the overall strength of the pick-up arm to such an extent that the pick-up arm is not able to guide the pick-up in the groove during the playing of a recording disc. On the other hand the slits in the pick-up arm will have a size sufficient to have an impact on the stiffness and thereby the resonance generation of the pick-up arm as will be discussed below.

In a further advantageous embodiment of the invention the pick-up arm is manufactured from one of the following: aluminium, carbon reinforced resin, plastics.

Traditionally, pick-up arms have been manufactured from lightweight materials e.g. Al, Mg Ti or moulded plastics or composites e.g. carbon fibre with resin and much attention has not been paid to the configuration of the pick-up arm.

However, with the present invention providing apertures in the pick-up arms it is possible to modify the characteristics of the pick-up arm to such an extent that traditional materials from which the pick-up arms are usually manufactured may be used for the present invention and still achieve the surprising effect.

In a still further advantageous embodiment of the invention the pick-up arm in a cross-section orthogonal to the pick-up arm's longitudinal extend has a circular shape, oval shape, elliptical shape, polygonal shape. It is clear that the cross-section orthogonal to the longitudinal extend of the pick-up arm is important for the overall stiffness of the pick-up arm. However, tests have indicated that regardless of the cross-section, by preferably designing the apertures provided according to the present invention it is feasible to reduce the resonance phenomenon.

In a further advantageous embodiment the aperture on one side of the pick-up arm is larger than the same aperture on the opposite side of the pick-up arm. This embodiment is particularly useful in cases where the cross-section of the pick-up arm is not symmetrical and as such by dimensioning the apertures appropriately it is possible to retain the stiffness of the pick-up arm and at the same time provide sufficient flexibility such that the reduction in resonance may be obtained.

### Description of the Drawing

The invention will now be explained with reference to the accompanying drawings in which
- Figure 1: illustrates a traditional turntable schematically
- Figure 2: illustrates a pick-up schematically
- Figure 3: illustrates an embodiment of the invention
- Figure 4: illustrates an embodiment of the invention
- Figure 5: illustrates an embodiment of the invention
- Figure 6: illustrates actual test results measured on a standard pick-up arm and with a pick-up arm provided with slits

### Detailed Description of the Invention

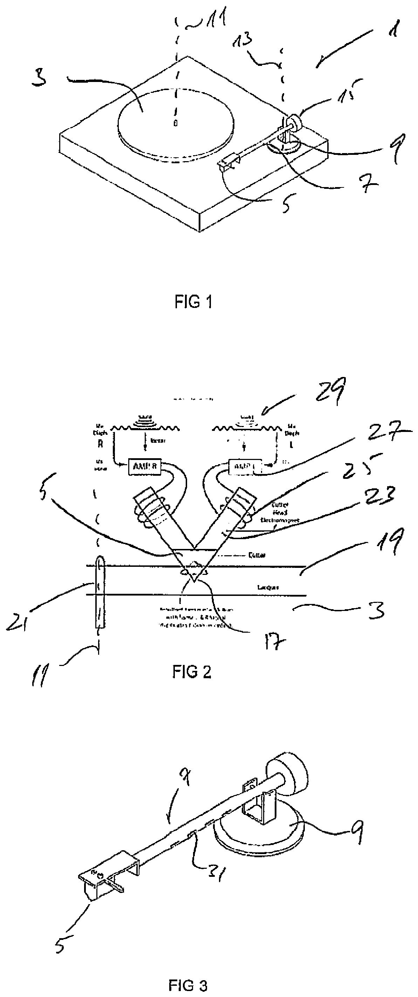

In figure 1 is schematically illustrated a traditional turntable 1. The turntable 1 typically has a circular turntable 3 which may be rotated at a predetermined speed. Typically for most records they are usually driven at speeds of 33 rpm or 45 rpm. In order to transfer the sound from a record placed on the turntable 3 a pick-up 5 is provided on a pick-up arm 7. The pick-up arm 7 is pivotably mounted on a mounting 9 such that the pick-up arm and thereby also the pick-up 5 may be positioned as indicated in figure 1 and brought to a position where the pick-up engages a record placed on the turntable 3. The turntable 3 pivots around a vertical axis 11 through the centre of the turntable whereas the pick-up arm 7 is pivotable around a parallel axis 13 going through the mounting 9.

In order to create the correct pressure for the pick-up 5 on the record placed on the turntable 3 a counterweight 15 may be provided on the pick-up arm such that only a slight pressure is exerted by the pick-up 5 onto the record placed on the turntable 3.

In figure 2 is schematically illustrated a pick-up 5 engaged in a groove 17 provided in a record 19 placed on a turntable 3. The turntable 3 rotates around a center peg 21 which is arranged concentrically with the axis 11 around which the turntable 3 rotates. Typically, a record will be provided with one groove 17 arranged as a spiral on the record 19. As the pick-up 5 travels through the groove, it will start at the periphery of the record and slowly transfer towards the centre of the record 19. The groove 17 is foreseen with notches, indentations and other irregularities which will impact the pick-up 5 such that the vibrations on the pick-up will be registered. By connecting the pick-up to the conductive member 23 arranged in a coil 25 it is possible to generate a weak electrical signal which after having been amplified in an amplifier 27 may be reproduced as sound in a loudspeaker 29.

In the embodiment illustrated with reference to figure 2 the groove 17 has a substantially triangular cross-section and the irregularities such as notches and bumps are arranged on the sides of the grooves 17. However, it is also contemplated that the groove is made in the shape of a U where the notches and irregularities are placed at the bottom of the U. In this manner the pick-up will also be influenced to the electrically conducting member 23 in the coil 25.

During the generation of sound as described above the pick-up and the conducting members and coils will be exposed to the impact of the notches, indentations and other irregularities provided (on purpose) in the groove 17. During this movement the pick-up arm 7 will naturally be influenced, and this is where the resonance is created. The present invention has as illustrated in e.g. figures 3, 4 and 5 realized that by providing apertures 31, 33, 35 in the pick-up arm 7 the generation of detrimental resonance in the pick-up arm may be minimized or avoided altogether. It is clear from the description of how the pick-up 5 is influenced by the irregularities in the groove 7 as described above with reference to figure 2 mechanical movement is transmitted to the pick-up arm 7. This mechanical movement does give rise to a certain amount of resonance depending on the geometry size, choice of material etc. of the pick-up arm and the surrounding construction.

However, by providing apertures 31, 33, 35 it is possible to design the pick-up arm in such a manner that the resonance is avoided altogether.

In figure 3 is illustrated an embodiment where the apertures 31 are provided in a substantially horizontal plane and where a plurality of apertures 31 are provided along the longitudinal extent of the pick-up arm 7.

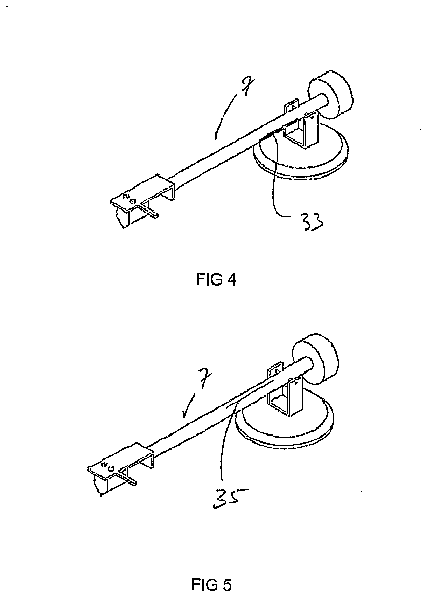

In figure 4 is illustrated an alternative embodiment where a single longitudinal slit 33 is provided also horizontally in the pick-up arm 7 in order to counter the resonance.

Likewise, in figure 5 is illustrated also a longitudinal slit 35 arranged in a vertical plane through the pick-up arm 7. The examples of slits illustrated with reference to figures 3, 4 and 5 are indicated in order to illustrate the concept of the present invention. It is, however, contemplated that the apertures may also be in the shape of circular or oval holes, longer or shorter slits and as indicated in figure 3 a plurality of slits. Furthermore, it may also be contemplated to have slits both arranged horizontally as indicated in fig-ure 4 and vertically as indicated in figure 5 such that the combination of vertical and horizontal slits together obtains the desired effects.

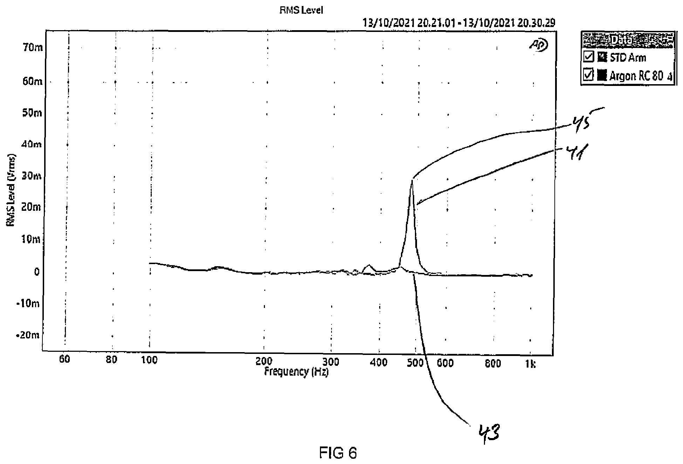

In figure 6 is depicted actual test results measured on a standard pick-up arm 41 and with a pick-up arm 43 provided with slits as discussed above. Particularly, the curve 41 indicates a pick-up arm as illustrated in figure 1 where a substantially homogenous circular cross-section of the pick-up arm is used in a record player. The curve represented by 43 is the same pick-up arm provided with an aperture as indicated in figure 5. As clearly indicated in figure 6 a substantial resonance peak 45 is registered around approx. 480 Hz whereas with the modified pick-up arm according to the present invention illustrated by the curve 43 there is no peak at this frequency. Altogether, it may be seen that the modified pick-up arm modified with one or more apertures as described above does not exhibit any resonance in the pick-up arm resulting in a more correct and true sound reproduction altogether.

## Claims

1. A pick-up arm for record players suitable to play recording discs, where said pick-up arm (7) adjacent one end is mounted to a mounting (9) allowing the pick-up arm (7) to pivot about an axis (13) orthogonal to the plane of the recording discs (3), and where a pickup (5) is mounted in the opposite end of the pick-up arm (7), **characterized in that** the pick-up arm (7) is a monolithic hollow tube-structure wherein one or more apertures (31,33,35) is/are provided in the pick-up arm (7), said aperture(s) (31,33,35) penetrating through said pick-up arm (7) such that by providing apertures (31,33,35) in the pick-up arm resonance phenomenon is substantially reduced thereby greatly improving the sound quality.

2. Pick-up arm according to claim 1 wherein the aperture (31,33,35) is arranged parallel to the direction of the axis (13) around which the pick-up arm (7) pivots.

3. Pick-up arm according to claim 1 wherein the aperture (31,33,35) is arranged perpendicular to the direction of the axis (13) around which the pick-up arm (7) pivots.

4. Pick-up arm according to claim 1 or 2 wherein the aperture (31,33,35) is in the shape of a slit, where said slit's longitudinal extend is arranged in parallel to the longitudinal extend of the pick-up arm (7).

5. Pick-up arm according to claim 3 wherein the length of the slit (31,33,35) in the longitudinal direction of the pick-up arm (7) is between 15% and 85% of the length of the pick-up arm, more preferred 20% to 65% of the length of the pick-up arm (7).

6. Pick-up arm according to claim 3 wherein the width of the slit (31,33,35) orthogonal to the longitudinal extend of the pick-up arm (7) is between 0.1mm to 4 mm, more preferred between 0.5 mm and 2 mm.

7. Pick-up arm according to any preceding claim wherein the pick-up arm (7) is manufactured from one of the following: aluminum, carbon reinforced resin, plastics.

8. Pick-up arm according to any preceding claim wherein the pick-up arm (7) in a cross-section orthogonal to the pick-up arm's longitudinal extend has a circular shape, oval shape, elliptical shape, polygonal shape.

9. Pick-up arm according to claim 1 wherein the aperture (31,33,35) on one side of the pick-up arm (7) is larger than the same aperture (31,33,35) on the opposite side of the pick-up arm (7).

## Patentansprüche

1. Aufnahmearm für Plattenspieler, der geeignet ist, Schallplatten abzuspielen, wobei der Aufnahmearm (7) benachbart zu einem Ende an einer Halterung (9) montiert ist, die es dem Aufnahmearm (7) ermöglicht, um eine Achse (13) orthogonal zu der Ebene der Schallplatten (3) zu schwenken, und wobei ein Tonabnehmer (5) an dem gegenüberliegenden Ende des Aufnahmearms (7) montiert ist, **dadurch gekennzeichnet, dass** der Aufnahmearm (7) eine monolithische Hohlrohrkonstruktion ist, wobei eine oder mehrere Öffnungen (31, 33, 35) in dem Aufnahmearm (7) bereitgestellt ist/sind, wobei die Öffnung(en) (31, 33, 35) den Aufnahmearm (7) derart durchdringt/durchdringen, dass durch Bereitstellen der Öffnungen (31, 33, 35) ein Resonanzphänomen in dem Aufnahmearm wesentlich reduziert ist und dadurch die Klangqualität erheblich verbessert wird.

2. Aufnahmearm nach Anspruch 1, wobei die Öffnung (31, 33, 35) parallel zu der Richtung der Achse (13), um die der Aufnahmearm (7) schwenkt, angeordnet ist.

3. Aufnahmearm nach Anspruch 1, wobei die Öffnung (31, 33, 35) senkrecht zu der Richtung der Achse (13), um die der Aufnahmearm (7) schwenkt, angeordnet ist.

4. Aufnahmearm nach Anspruch 1 oder 2, wobei die Öffnung (31, 33, 35) die Form eines Schlitzes aufweist, wobei die Längserstreckung des Schlitzes parallel zu der Längserstreckung des Aufnahmearms (7) angeordnet ist.

5. Aufnahmearm nach Anspruch 3, wobei die Länge des Schlitzes (31, 33, 35) in der Längsrichtung des Aufnahmearms (7) zwischen 15 % und 85 % der Länge des Aufnahmearms, mehr bevorzugt 20 % bis 65 % der Länge des Aufnahmearms (7), beträgt.

6. Aufnahmearm nach Anspruch 3, wobei die Breite des Schlitzes (31, 33, 35) orthogonal zu der Längserstreckung des Aufnahmearms (7) zwischen 0,1 mm und 4 mm, mehr bevorzugt zwischen 0,5 mm und 2 mm, beträgt.

7. Aufnahmearm nach einem der vorhergehenden Ansprüche, wobei der Aufnahmearm (7) aus einem der Folgenden hergestellt ist: Aluminium, kohlenstofffaserverstärktes Harz, Kunststoffe.

8. Aufnahmearm nach einem der vorhergehenden Ansprüche, wobei der Aufnahmearm (7) in einem Querschnitt orthogonal zu der Längserstreckung des Aufnahmearms eine kreisförmige Form, eine ovale Form, eine elliptische Form, eine polygonale Form aufweist.

9. Aufnahmearm nach Anspruch 1, wobei die Öffnung (31, 33, 35) auf einer Seite des Aufnahmearms (7) größer ist als die gleiche Öffnung (31, 33, 35) auf der gegenüberliegenden Seite des Aufnahmearms (7).

## Revendications

1. Bras de lecture pour tourne-disques adapté à la lecture de disques d'enregistrement, ledit bras de lecture (7) étant monté, près d'une extrémité, à un support (9) permettant au bras de lecture (7) de pivoter autour d'un axe (13) perpendiculaire au plan des disques d'enregistrement (3), et une tête de lecture (5) étant montée à l'extrémité opposée du bras de lecture (7), **caractérisé en ce que** le bras de lecture (7) est une structure tubulaire creuse monolithique, une ou plusieurs ouvertures (31, 33, 35) étant prévues dans le bras de lecture (7), ladite ou lesdites ouvertures (31, 33, 35) traversant ledit bras de lecture (7) de telle sorte que la fourniture d'ouvertures (31, 33, 35) dans le bras de lecture permet de réduire sensiblement le phénomène de résonance, améliorant ainsi considérablement la qualité sonore.

2. Bras de lecture selon la revendication 1, dans lequel l'ouverture (31, 33, 35) est disposée parallèlement à la direction de l'axe (13) autour duquel pivote le bras de lecture (7).

3. Bras de lecture selon la revendication 1, dans lequel l'ouverture (31, 33, 35) est disposée perpendiculairement à la direction de l'axe (13) autour duquel pivote le bras de lecture (7).

4. Bras de lecture selon la revendication 1 ou 2, dans lequel l'ouverture (31, 33, 35) a la forme d'une fente, l'extension longitudinale de ladite fente étant disposée parallèlement à l'extension longitudinale du bras de lecture (7).

5. Bras de lecture selon la revendication 3, dans lequel la longueur de la fente (31, 33, 35) dans la direction longitudinale du bras de lecture (7) est comprise entre 15 % et 85 % de la longueur du bras de lecture, de préférence de 20 % à 65 % de la longueur du bras de lecture (7).

6. Bras de lecture selon la revendication 3, dans lequel la largeur de la fente (31, 33, 35) perpendiculaire à l'extension longitudinale du bras de lecture (7) est comprise entre 0,1 mm et 4 mm, de préférence entre 0,5 mm et 2 mm.

7. Bras de lecture selon l'une quelconque des revendications précédentes, le bras de lecture (7) étant fabriqué à partir de l'un des matériaux suivants : aluminium, résine renforcée de carbone, plastique.

8. Bras de lecture selon l'une quelconque des revendications précédentes, le bras de lecture (7) dans une section transversale perpendiculaire à l'extension longitudinale du bras de lecture ayant une forme circulaire, une forme ovale, une forme elliptique, une forme polygonale.

9. Bras de lecture selon la revendication 1, dans lequel l'ouverture (31, 33, 35) d'un côté du bras de lecture (7) est plus grande que la même ouverture (31, 33, 35) du côté opposé du bras de lecture (7).
